# EUROPÄISCHE PATENTSCHRIFT

(11) **EP 2 553 257 B1**
(45) Veröffentlichungstag und Bekanntmachung des Hinweises auf die Patenterteilung: **30.03.2016**
(21) Anmeldenummer: 11712533.6
(22) Anmeldetag: 30.03.2011
(51) Int. Cl.: F02N 11/08, H02J 7/14, B60R 16/03

(54) **BORDNETZ FÜR EIN FAHRZEUG SOWIE STEUERVORRICHTUNG ZUM STEUERN EINES STROMFLUSSES IN EINEM BORDNETZ EINES FAHRZEUGS**
ON-BOARD SUPPLY SYSTEM FOR A VEHICLE, AND CONTROL DEVICE FOR CONTROLLING A CURRENT FLOW IN AN ON-BOARD SUPPLY SYSTEM OF A VEHICLE
RÉSEAU DE BORD POUR VÉHICULE ET DISPOSITIF DE COMMANDE POUR RÉGULER UN FLUX DE COURANT DANS UN RÉSEAU DE BORD DE VÉHICULE

(30) Priorität: 30.03.2010 DE 102010013455; 30.03.2010 DE 102010013454; 20.12.2010 DE 102010063598
(43) Veröffentlichungstag der Anmeldung: 06.02.2013
(73) Patentinhaber: Continental Automotive GmbH, 30165 Hannover (DE)
(72) Erfinder: REICHOW, Dirk, 93173 Wenzenbach (DE); STECKERMEIER, Tobias, 93059 Regensburg (DE); GALLI, Tobias, 93426 Roding (DE)
(86) Internationale Anmeldenummer: PCT/EP2011/054968
(87) Internationale Veröffentlichungsnummer: WO 2011/121053

(56) Entgegenhaltungen:
- EP-A1- 2 154 359
- DE-A1- 10 305 357
- DE-A1-102005 039 362
- DE-A1-102006 037 699
- DE-A1-102008 054 720
- DE-A1-102009 024 374

## Beschreibung

Die Erfindung betrifft ein Bordnetz für ein Fahrzeug und eine Steuervorrichtung zur Steuerung eines Stromflusses in einem Bordnetz eines Fahrzeugs. Ferner betrifft die Erfindung ein Fahrzeug mit einem oben genannten Bordnetz.

Bordnetze heutiger Kraftfahrzeuge umfassen einen als Drehstrommaschine mit nachgeschalteter Gleichrichterschaltung ausgebildeten Generator als Energiewandler, einen ersten Energiespeicher, bspw. in der Form von einer Batterie, sowie über das Bordnetz zu versorgende elektrische Verbraucher, welche zusammengefasst als Systemlast bezeichnet werden. Der Generator, der erste Energiespeicher, sowie die Systemlast werden zusammengefasst als erstes Energiesystem bezeichnet. Ferner umfassen die Bordnetze einen weiteren Energiespeicher, wie z. B. in der Form von einem Doppelschichtkondensator, welcher als zweites Energiesystem bezeichnet wird. Die zwei Energiesysteme weisen unterschiedliche Betriebsspannungen als Systemspannungen auf und sind zueinander potentialgetrennt, aber auch potentialgebunden ausgeführt.

In einem Bordnetz ist es sehr wichtig, einen weitgehend sicheren Systemzustand (auf Englisch: Safe-State) einzuhalten.

Eine der Anforderungen zur Einhaltung eines sicheren Systemzustandes beim Eintreten eines Systemfehlers im Bordnetz, insb. im ersten Energiesystem, welcher zu einem drastischen Spannungsabfall im ersten Energiesystem führt, ist das Halten des elektrisch geschlossenen Strompfads im ersten Energiesystem, um eine unerwünschte parasitäre Strominjektion von dem ersten Energiesystem zum zweiten Energiesystem zu vermeiden, welche einerseits zu einem unkontrollierten Überladen des Energiespeichers des zweiten Energiesystems und andererseits zur Überhitzung der im Strompfad vom ersten Energiesystem zum zweiten Energiesystem befindlichen elektronischen Komponenten führt.

Sollte durch Fehler oder Systemanforderung in dem ersten Energiesystem, welches unter anderem die Steuervorrichtung mit Strom versorgt, die Versorgungsspannung für die Steuervorrichtung unterbrochen werden, so kann diese den Stromfluss im ersten Energiesystem nicht mehr ansteuern. Ein direkter Stromfluss von Stromquelle zur Systemlast wäre nicht mehr gegeben. Aber durch parasitäre Bauteile im Bordnetz, z.B. Bodydiode eines MOSFEST-Schalters, wird der o.g. Stromfluss über das zweite Energiesystem geführt. Dies führt zu einem ungewollten Ladungsausgleich bzw. Aufladen des Energiespeichers im zweiten Energiesystem und zur Überhitzung der parasitären Bauteile im Bordnetz.

Die Druckschrift DE 10 2011 039 362 A1 beschreibt ein Fahrzeugenergieversorgungssystem, das eine elektrische Last und einen ersten Energiespeicher für eine elektrische Last aufweist. Zwischen diesen Komponenten ist ein Schalter vorgesehen, der von einem Systemcontroller angesteuert wird, und der die elektrische Verbindung zwischen dem Energiespeicher und der elektrischen Last herstellt bzw. unterbricht. Diese Topologie wird auf bei dem hier beschriebenen Bordnetz verwendet. Bei einem Spannungseinbruch der Versorgungsspannung des Controllers ist der Schalter jedoch nicht mehr steuerbar. Im Gegensatz zu dem hier beschriebenen Bordnetz ist in der DE 10 2011 039 362 A1 ein weiterer Transistor vorgesehen, der in diesem Fall geschlossen wird, um einen Stromfluss von dem Energiespeicher zu der elektrischen Last zu ermöglichen.

Die Druckschrift DE 10 2006 037 699 A1 beschreibt eine Spannungsversorgungseinrichtung, die ein Steuergerät und Schaltmittel aufweist, wie sie auch in dem hier beschriebenen Bordnetz verwendet werden. Im Gegensatz zu dem hier beschriebenen Bordnetz sind die beiden Schaltmittel zum Teil als Umschalter ausgebildet.

Die Aufgabe der vorliegenden Erfindung liegt somit darin, das eingangs genannte Bordnetz bzw. die eingangs genannte Steuervorrichtung so zu verbessern, dass das Bordnetz beim Eintreten eines Systemfehlers weiterhin mit einfachen Mitteln in einem sicheren Systemzustand aufrecht erhalten werden kann.

Diese Aufgabe wird durch die unabhängigen Ansprüche gelöst. Vorteilhafte Ausgestaltungen sind Gegenstand der Unteransprüche.

Gemäß einem ersten Aspekt der Erfindung wird ein Bordnetz geschaffen, welches einen ersten und einen zweiten Strompfad umfasst.

Der erste Strompfad umfasst zumindest einen Energieverbraucher, welcher auch als Systemlast bezeichnet wird, einen ersten Energiespeicher eingerichtet zum Bereitstellen von elektrischer Energie für die Systemlast und eingerichtet zum Bereitstellen einer ersten Steuerspannung, und einen ersten mittels der ersten Steuerspannung vom ersten Energiespeicher steuerbaren, selbstsperrenden Schalter, welcher ausgestaltet ist, in einem geschlossenen Zustand die Systemlast zu derer Versorgung mit elektrischer

Energie mit dem ersten Energiespeicher elektrisch zu verbinden und in einem geöffneten Zustand die Systemlast von dem ersten Energiespeicher wieder zu trennen. Damit dient der erste Schalter dazu, im geschlossenen Zustand einen Stromfluss im ersten Energiesystem bzw. vom ersten Energiespeicher zur Systemlast herzustellen bzw. im geöffneten Zustand diesen Stromfluss zu unterbinden. Der erste Schalter weist vorteilhafterweise einen Steueranschluss auf, an dem die Steuerspannung zum Schließen bzw. Öffnen des ersten Schalters angelegt wird.

Bei der in dieser Erfindung genannten "Steuerspannung" handeltes sich um eine Spannung, welche von einem Energiespeicher bereitgestellt wird und mit der ein steuerbarer Schalter mittelbar oder unmittelbar gesteuert werden kann. Diese Steuerspannung kann eine Spannung sein, welche von einem oder mehreren Komponenten mit einem bestimmten Koeffizient umgewandelt an den Schalteranschluss des Schalters angelegt wird.

"Selbstsperrender Schalter" bedeutet, dass der Schalter ausgestaltet ist, beim Anliegen einer Steuerspannung mit ausreichend hohem Spannungswert am Steueranschluss des Schalters zu schließen bzw. im geschlossenen Zustand zu bleiben und so einen Stromfluss zwischen den beiden Schalteranschlüssen zu ermöglichen, und beim Wegfall der Steuerspannung bzw. beim Abfall der Steuerspannung unter den zum Halten des Schalters im geschlossenen Zustand minimal erforderlichen Spannungswert automatisch zu öffnen und so den Stromfluss zwischen den beiden Schalteranschlüssen zu unterbrechen.

Der zweite Strompfad umfasst zumindest die oben genannte Systemlast, den ersten Energiespeicher und eine Energiebereitstellungsvorrichtung ausgestaltet zum Bereitstellen von elektrischer Energie für die Systemlast und ausgestaltet zum Bereitstellen einer zweiten Steuerspannung, wobei die Energiebereitstellungsvorrichtung zur Versorgung der Systemlast mit dieser elektrisch verbindbar ist.

Das Bordnetz umfasst ferner eine Steuervorrichtung ausgestaltet zum Erfassen eines Spannungswertes der ersten Steuerspannung und zum Schließen des ersten Schalters, wenn der erfasste Spannungswert der ersten Steuerspannung unter einen zum Schließen des ersten Schalters im geschlossenen Zustand minimal erforderlichen Spannungsschwellwert fällt, wobei die Steuervorrichtung ferner ausgestaltet ist, den ersten Schalter mit einer von der Energiebereitstellungsvorrichtung bereitgestellten Steuerspannung zu schließen.

Damit ist ein Bordnetz geschaffen, welches beim Eintreten eines Systemfehlers, welcher zu einem Abfall der Versorgungsspannung der Steuervorrichtung führt, weiterhin in einem sicheren Systemzustand aufrecht erhalten werden kann. Vorteilhafterweise umfasst der zweite Strompfad einen zweiten, steuerbaren Schalter, welcher ausgestaltet ist, in einem geschlossenen Zustand die Systemlast zu derer Versorgung mit elektrischer Energie mit dem ersten Energiespeicher und der Energiebereitstellungsvorrichtung elektrisch zu verbinden und in einem geöffneten Zustand diese elektrische Verbindung zu unterbrechen. Damit dient der zweite Schalter dazu, im geschlossenen Zustand einen Stromfluss von der Energiebereitstellungsvorrichtung zum ersten Energiesystem und zur Systemlast herzustellen und im geöffneten Zustand diesen Stromfluss zu unterbinden.

Gemäß einer ersten vorteilhaften Ausgestaltung weist das Bordnetz einen zweiten Energiespeicher als die Energiebereitstellungsvorrichtung auf, die eingerichtet ist, eine zweite Steuerspannung bereitzustellen, wobei die Steuervorrichtung eingerichtet ist, mit dieser zweiten Steuerspannung den ersten Schalter zu schließen.

In einer alternativen Ausgestaltung weist das Bordnetz eine Notspannungsquelle bzw. Notstromquelle als die Energiebereitstellungsvorrichtung auf, die ausgestaltet ist, eine dritte Steuerspannung bereitzustellen, und wobei die Steuervorrichtung ferner ausgestaltet ist, den ersten Schalter mit dieser dritten Steuerspannung zu schließen.

Diese beiden Ausgestaltungen haben den Vorteil, dass der erste Schalter beim Ausfall einer Spannungsquelle weiterhin von einer weiteren redundanten Spannungsquelle gesteuert werden kann, wodurch das Bordnetz noch resistenter gegenüber einem Systemfehler in einer Spannungsquelle ist. Die Ausgestaltung mit der ersten Steuerspannung vom zweiten Energiespeicher hat noch einen Vorteil, dass das Bordnetz keine Spannungsquelle extra benötigt, sondern auf eine bereits vorhandene Spannungsquelle, also den zweiten Energiespeicher zurückgreifen kann.

Vorteilhafterweise sind die ersten und die zweiten Energiespeicher ausgestaltet, nur dann zeitgleich mit der Systemlast elektrisch verbunden zu werden, wenn sich der erste Schalter im geöffneten Zustand und gleichzeitig der zweite Schalter im geschlossenen Zustand befinden. Dadurch wird vermieden, dass durch die gleichzeitig geschlossenen beiden Schalter ein elektrischer Kurzschluss im zweiten Strompfad entsteht, welcher zu einem Stromverlust beim zweiten Energiesystem bzw. zu einem Defekt des zweiten Energiesystems führen kann.

Die Steuervorrichtung ist eingerichtet, den ersten Schalter im geschlossenen Zustand vorzugsweise nur dann mit der zweiten oder der dritten Steuerspannung zu schließen bzw. zu halten, wenn sich der zweite Schalter im geöffneten Zustand befindet. Dadurch wird erreicht, dass nur im Falle eines Systemfehlers die unerwünschte parasitäre Strominjektion vom ersten Energiesystem über den geöffneten zweiten Schalter zum zweiten Energiesystem durch den geschlossenen ersten Schalter kontrolliert abgeleitet und unschädlich gemacht wird. Ein gewünschter Stromfluss durch den gezielt geschlossenen zweiten Schalter soll dagegen nicht durch den ersten Schalter abgeführt werden.

Dabei ist die Steuervorrichtung ausgestaltet, den ersten Schalter vorteilhafterweise abhängig von Spannungswerten der ersten Steuerspannung und zumindest einer der zweiten und der dritten Steuerspannungen mit der ersten Steuerspannung, mit der zweiten Steuerspannung oder mit der dritten Steuerspannung zu schließen bzw. im geschlossenen Zustand zu halten. Dabei ist die Steuervorrichtung ausgestaltet, die drei Steuerspannungen zueinander zu vergleichen und ist ferner ausgestaltet, den ersten Schalter mit der Steuerspannung mit dem höchsten Spannungswert zu schließen bzw. im geschlossenen Zustand zu halten.

Um diese drei Steuerspannungen zueinander zu vergleichen, weist die Steuervorrichtung zumindest eins, vorzugsweise drei elektrische Ventile auf, welche vorzugsweise als Diode ausgebildet sind.

Das erste elektrische Ventil ist zwischen dem Steueranschluss des ersten Schalters und dem ersten Energiespeicher angeordnet und zum Steueranschluss des ersten Schalters hin elektrisch leitend und umgekehrt elektrisch sperrend ausgeführt.

Das zweite elektrische Ventil ist zwischen dem Steueranschluss des ersten Schalters und dem zweiten Energiespeicher angeordnet und ebenfalls zum Steueranschluss des ersten Schalters hin elektrisch leitend und umgekehrt elektrisch sperrend ausgeführt.

Das dritte elektrische Ventil ist zwischen dem Steueranschluss des ersten Schalters und der Notstromquelle angeordnet und zum Steueranschluss des ersten Schalters hin elektrisch leitend und umgekehrt elektrisch sperrend ausgeführt.

So ist eine Steuervorrichtung geschaffen, welche einfachweise nur mit drei elektrischen Ventilen bzw. Dioden aus den drei Steuerspannungen die eine Steuerspannung mit dem höchsten Spannungswert auswählt und dann mit dieser Steuerspannung den ersten Schalter steuert.

Die Notstromquelle ist vorzugsweise als ein wiederaufladbarer Akkumulator ausgeführt. Das Bordnetz weist zwischen der Notstromquelle und zumindest einem der beiden Energiespeicher eine Nachladeeinrichtung auf, wobei das das Bordnetz ausgestaltet wird, mittels dieser die Notstromquelle mit Strom des ersten und/oder des zweiten Energiespeichers aufzuladen. Dies hat den Vorteil, dass die Notstromquelle einfach aufgeladen werden kann, ohne dass dabei der Ladevorgang von einer externen Nachladevorrichtung gesteuert werden muss.

Gemäß einer weiteren vorteilhaften Ausgestaltung weist die Steuervorrichtung zwischen dem Steueranschluss des ersten Schalters und einer elektrischen Masse einen dritten steuerbaren, selbstsperrenden Schalter auf, welcher ausgestaltet ist, in einem geschlossenen Schaltzustand den Steueranschluss mit der elektrischen Masse elektrisch kurzzuschließen. Ferner weist die Steuervorrichtung eine Steuereinheit zur Steuerung eines dritten Schalters auf, welche ausgestaltet ist, einen aktuellen Strompegel am Strompfad vom ersten Energiespeicher zur Systemlast, insb. am ersten Energiespeicher zu erfassen, den aktuell erfassten Strompegel mit einem vorgegebenen Stromschwellwert zu vergleichen, und bei Überschreiten des Stromschwellwertes durch den aktuell erfassten Strompegel den dritten Schalter zu schließen, und so den Steueranschluss des ersten Schalters auf Massepotential zu legen.

Damit ist sichergestellt, dass der erste Schalter in einem fehlerfreien Betriebsfall im Bordnetz, in dem die Systemlast sowohl von dem ersten als auch dem zweiten Energiespeicher versorgt wird, sicher geöffnet bzw. in einem geöffneten wird, um den zweiten Energiesystem bzw. den zweiten Energiespeicher mit dem ersten Energiesystem bzw. mit dem ersten Energiespeicher und mit der Systemlast sicher elektrisch verbinden zu können. Vorteilhafterweise steuert die Steuereinheit auch den zweiten Schalter synchron zu dem ersten Schalter, wobei beim Öffnen des ersten Schalters zeitgleich der zweite Schalter geschlossen wird und umgekehrt.

So ist ein Bordnetz für einen Fahrzeug geschaffen, welches beim Eintreten von Systemfehlern im Bordnetz weiterhin in einem sicheren Systemzustand aufrecht erhalten werden kann.

Weiterhin wird eine Steuervorrichtung zum Steuern eines Stromflusses in einem Bordnetz beschrieben, welche einen ersten, einen zweiten, einen dritten und einen vierten elektrischen Anschluss zur Herstellung von elektrischen Verbindungen von der Steuervorrichtung zum Bordnetz aufweist. Zwischen dem ersten und dem zweiten Anschluss weist die Steuervorrichtung einen ersten, mit einer an dem vierten Anschluss anliegenden, ersten Steuerspannung steuerbaren, selbstsperrenden Schalter auf, welcher ausgestaltet ist, in einem geschlossenen Zustand den ersten Anschluss mit dem zweiten Anschluss elektrisch zu verbinden. Zwischen dem ersten und dem dritten Anschluss weist die Steuervorrichtung einen zweiten steuerbaren Schalter, welcher ausgestaltet ist, in einem geschlossenen Zustand den ersten Anschluss mit dem dritten Anschluss elektrisch zu verbinden. Ferner weist die Steuervorrichtung eine Steuereinrichtung auf ausgestaltet zum Schließen des ersten Schalters bzw. zum Halten des ersten Schalters im geschlossenen Zustand, wenn der aktuelle Spannungswert der am vierten Anschluss der Steuervorrichtung anliegenden ersten Steuerspannung unter einen zum Schließen bzw. zum Halten des ersten Schalters im geschlossenen Zustand minimal erforderlichen Spannungsschwellwert fällt, wobei der erste Schalter ausgestaltet ist, in dem durch die Steuereinrichtung gesteuert geschlossenen Zustand die elektrische Verbindung vom ersten Anschluss zum zweiten Anschluss aufrecht zu halten und so einen potentiellen parasitären Stromfluss vom ersten Anschluss über den zweiten Schalter zum dritten Anschluss zu verhindern.

Vorteilhafterweise ist die Steuereinrichtung ausgestaltet, den ersten Schalter mit einer am dritten Anschluss anliegenden zweiten Steuerspannung zu schließen bzw. im geschlossenen Zustand zu halten.

Alternativ weist die Steuervorrichtung eine Notspannungs- bzw. Notstromquelle zum Bereitstellen einer zum Schließen des ersten Schalters bzw. zum Halten des ersten Schalters im geschlossenen Zustand erforderlichen dritten Steuerspannung auf, mit der die Steuereinrichtung den ersten Schalter schließt bzw. im geschlossenen Zustand hält.

Die Steuervorrichtung ist eingerichtet, vorzugsweise nur dann den ersten Schalter zu schließen bzw. im geschlossenen Zustand zu halten, wenn sich der zweite Schalter im geöffneten Zustand befindet.

Die Steuervorrichtung schließt bzw. hält den ersten Schalter vorzugsweise abhängig von Spannungswerten der ersten Steuerspannung und zumindest einer der zweiten und der dritten Spannungen mit der ersten Steuerspannung, mit der zweiten Steuerspannung oder mit der dritten Steuerspannung schließt bzw. im geschlossenen Zustand.

Hierzu weist die Steuereinrichtung vorzugsweise ein erstes, zwischen dem Steueranschluss des ersten Schalters und dem vierten Anschluss angeordnetes, zum Steueranschluss des ersten Schalters hin leitendes, und umgekehrt sperrendes, elektrisches Ventil, insb. eine Diode, auf.

Je nach Ausgestaltung weist die Steuereinrichtung zudem ein zweites, zwischen dem Steueranschluss des ersten Schalters und dem dritten Anschluss angeordnetes, zum Steueranschluss des ersten Schalters hin leitendes, und umgekehrt sperrendes, elektrisches Ventil, oder/und ein drittes, zwischen dem Steueranschluss des ersten Schalters und der Notstromquelle angeordnetes, zum Steueranschluss des ersten Schalters hin leitendes, und umgekehrt sperrendes, elektrisches Ventil, auf. Vorzugsweise sind diese beiden elektrischen Ventile auch als eine kostengünstige und platzsparende Diode ausgeführt.

Die Notstromquelle ist vorteilhafterweise als ein wiederaufladbarer Akkumulator ausgeführt und wird von einer zwischen dem vierten Anschluss und der Notstromquelle befindliche erste Nachladeeinrichtung und/oder einer zwischen dem dritten Anschluss und der Notstromquelle angeordnete zweite Nachladeeinrichtung mit dem am vierten und/oder dritten Anschluss angelegten Strom aufladbar ausgeführt.

In einer weiteren bevorzugten Ausgestaltung weist die Steuervorrichtung zwischen dem Steueranschluss des ersten Schalters und dem zweiten Anschluss einen dritten steuerbaren Schalter auf. Ferner weist die Steuervorrichtung eine Steuereinheit zur Steuerung des dritten Schalters auf, welche ausgestaltet ist, einen aktuellen Strompegel des durch den ersten Anschluss hindurchfließenden Stromes zu erfassen, den aktuell erfassten Strompegel mit einem vorgegebenen Stromschwellwert zu vergleichen, und bei Überschreiten des Stromschwellwertes durch den aktuell erfassten Strompegel den dritten Schalter zu schließen und so den Steueranschluss des ersten Schalters auf Massepotential zu legen.

Gemäß einem weiteren Aspekt der vorliegenden Erfindung wird ein Fahrzeug, insb. ein Kraftfahrzeug, mit einem oben beschriebenen Bordnetz oder einer oben beschriebenen Steuervorrichtung geschaffen.

Vorteilhafte Ausgestaltungen des oben dargestellten Bordnetzes sind, soweit im Übrigen auf die oben beschriebene Steuervorrichtung bzw. auf das oben genannte Fahrzeug übertragbar, auch als vorteilhafte Ausgestaltungen der Steuervorrichtung bzw. des Fahrzeugs anzusehen.

Im Folgenden wird die Erfindung anhand drei Ausführungsbeispiele unter Zuhilfenahme von Figuren näher erläutert. Als Beispiel dient ein Bordnetz eines Hybridelektrofahrzeugs.

Es zeigen:
Figur 1 eine schematische Darstellung eines Bordnetzes gemäß einem ersten Ausführungsbeispiel der Erfindung;
Figur 2 eine schematische Darstellung einer Steuereinrichtung des Bordnetzes gemäß Figur 1;
Figur 3 eine schematische Darstellung eines Bordnetzes gemäß einem zweiten Ausführungsbeispiel der Erfindung;
Figur 4 eine schematische Darstellung einer Steuereinrichtung des Bordnetzes gemäß Figur 3;
Figur 5 eine schematische Darstellung eines Bordnetzes gemäß einem dritten Ausführungsbeispiel der Erfindung;
Figur 6 eine schematische Darstellung einer Steuereinrichtung des Bordnetzes gemäß Figur 5;
Figur 7 eine schematische Darstellung einer Nachladeeinrichtung des Bordnetzes gemäß Figur 5.

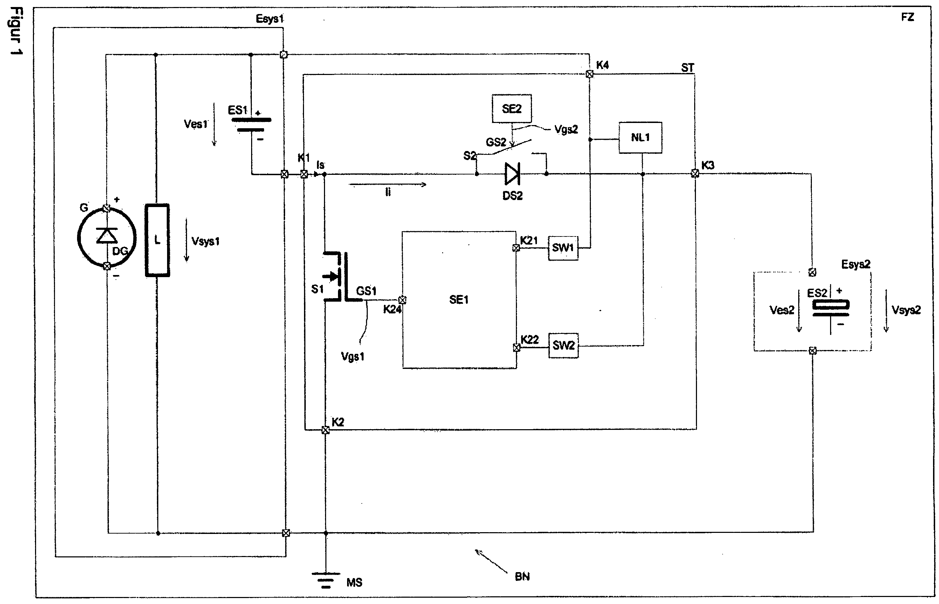

Es sei auf Figuren 1, 3 und 5 verwiesen, in denen jeweils eines der drei beispielhaften Bordnetze BN eines Fahrzeugs FZ, insb. in der Form eines Hybridelektrofahrzeugs, schematisch dargestellt sind. Zuerst werden die gemeinsamen Komponenten der drei beispielhaften Bordnetze BN beschrieben. Alle drei Bordnetze BN gemäß Figuren 1, 3 und 5 umfassen ein erstes und ein zweites Teilnetz bzw. Energiesystem Esys1 und Esys2, sowie eine zwischen diesen beiden Energiesystemen Esys1, Esys2 zwischengeschaltete Steuervorrichtung ST. Die Energiesysteme Esys1, Esys2 in diesem beispielhaften Bordnetz BN sind zueinander potentialgebunden. Alternative Ausführungsformen mit voneinander potential getrennten Energiesystemen Esys1, Esys2 sind auch möglich.

Das erste Energiesystem Esys1 umfasst einen Generator G, einen ersten Energiespeicher ES1 des Bordnetzes BN, sowie eine Gruppe von Energieverbrauchern wie z. B Lampen oder Anlasser für einen Verbrennungsmotor des Fahrzeugs FZ, welche zusammengefasst als Systemlast L bezeichnet werden.

Der Generator G ist als Drehstrommaschine mit nachgeschalteter Gleichrichterschaltung DG ausgebildet und dient als Energiewandler zum Umwandeln der kinetischen Energie vom Fahrzeug FG in elektrische Energie und zugleich als erste Energiequelle zum Versorgen der Systemlast L mit elektrischer Energie.

Der erste Energiespeicher ES1 umfasst eine oder mehrere in Reihe geschaltete wiederauf ladbare Batteriezellen und dient als zweite Energiequelle zum Versorgen der Systemlast L mit elektrischer Energie. Der erste Energiespeicher ES1 wird vom Generator G mit Strom aufgeladen und speichert somit die vom Generator G umgewandelte elektrische Energie.

Das zweite Energiesystem Esys2 umfasst einen weiteren also zweiten Energiespeicher ES2 des Bordnetzes BN. Der zweite Energiespeicher ES2 ist als Doppelschichtkondensator ausgebildet und dient als dritte Energiequelle ebenfalls zum Versorgen der Systemlast L mit elektrischer Energie. Der zweite Energiespeicher ES2 wird vom Generator G und/oder vom ersten Energiespeicher ES1 mit Strom aufgeladen.

Die zwei Energiesysteme Esys1, Esys2 weisen unterschiedliche Systemspannungen Vsys1, Vsys2 auf, wobei die Systemspannung Vsys1 des ersten Energiesystem Esys1 in der Regel höher als die Systemspannung Vsys2 des zweiten Energiesystems Esys2 ist.

In einem fehlerfreien Betriebszustand, in dem die Systemlast L von dem Generator G und dem ersten Energiespeicher ES1 mit Strom versorgt wird, ist die erste Systemspannung Vsys1 des ersten Energiesystems Esys1 identisch wie die Ladespannung Ves1 des ersten Energiespeichers ES1 und gleich der Bordnetzspannung. Die zweite Systemspannung Vsys2 ist gleich der Ladespannung Ves2 des zweiten Energiespeichers ES2.

Die Steuerung von Stromfluss in dem jeweiligen Energiesystem Esy1, Esy2 sowie zwischen diesen beiden Energiesystemen Esys1, Esys2 wird von der Steuervorrichtung ST bewirkt. Hierzu weist die Steuervorrichtung ST vier elektrische Anschlüsse K1, K2, K3, K4 auf, welche zur Herstellung von elektrischen Verbindungen von der Steuervorrichtung ST zum Bordnetz BN bzw. zu den beiden Energiesystemen Esys1, Esys2, dienen.

Über den ersten elektrischen Anschluss K1 ist die Steuervorrichtung ST mit dem Minuspol des ersten Energiespeichers ES1 elektrisch verbunden.

Über den zweiten elektrischen Anschluss K2 ist die Steuervorrichtung ST mit dem Minuspol des Gleichrichters DG des Generators G, mit dem Minuspol des zweiten Energiespeichers ES2, mit der Systemlast L, sowie mit elektrischer Masse MS elektrisch verbunden.

Über den dritten elektrischen Anschluss K3 ist die Steuervorrichtung ST mit dem Pluspol des zweiten Energiespeichers ES2 elektrisch verbunden.

Über den vierten elektrischen Anschluss K4 ist die Steuervorrichtung ST dem Pluspol des Gleichrichters DG des Generators G, mit dem Pluspol des ersten Energiespeichers ES1, sowie mit der Systemlast L elektrisch verbunden.

Die Steuervorrichtung ST umfasst ferner einen ersten und einen zweiten steuerbaren Schalter S1, S2 sowie eine erste und eine zweite Steuereinrichtung SE1, SE2 zum Steuern des ersten bzw. des zweiten Schalters S1 und S2.

Die beiden Schalter S1 und S2 sind als über den jeweiligen Gate- bzw. Steueranschluss GS1, GS2 steuerbare, selbstsperrende MOSFET-Halbleiterschalter ausgebildet. Beim Anliegen einer Gatespannung bzw. Steuerspannung Vgs1, Vgs2 am jeweiligen Steueranschluss GS1, GS2 mit einem Spannungswert von z. B. 5V sind diese beiden Schalter S1, S2 leitend, also gehen in einen "geschlossenen" Schaltzustand über, und beim Wegfall der Steuerspannung Vgs1, Vgs2 oder beim Anliegen einer Steuerspannung Vgs1, Vgs2 mit einem nicht ausreichenden Spannungswert von unter 5V sind diese sperrend, also gehen in einen "geöffneten" Schaltzustand über.

Der erste Schalter S1 ist zwischen dem ersten und dem zweiten Anschluss K1, K2 angeordnet und verbindet in dem geschlossenen Schaltzustand den ersten und den zweiten Anschluss K1 und K2 elektrisch miteinander. Somit stellt der erste Schalter S1 im geschlossenen Schaltzustand einen ersten geschlossenen Strompfad vom ersten Energiespeicher ES1 zur Systemlast L her, sodass die Systemlast L vom ersten Energiespeicher ES1 mit elektrischer Energie versorgt wird. Im geöffneten Schaltzustand unterbricht der erste Schalter S1 die elektrische Verbindung vom ersten Energiespeicher ES1 zur Systemlast L bzw. der erste Strompfad wird geöffnet.

Der zweite Schalter S2 ist zwischen dem ersten und dem dritten Anschluss K1, K3 angeordnet und verbindet in dem geschlossenen Schaltzustand den ersten und den dritten Anschluss K1 und K3 elektrisch miteinander. Damit verbindet der zweite Schalter S2 im geschlossenen Schaltzustand und bei gleichzeitig geöffnetem erstem Schalter S1 den zweiten Energiespeicher ES2 mit dem ersten Energiespeicher ES1 und mit der Systemlast L elektrisch und stellt so einen zweiten geschlossenen Strompfad vom ersten Energiespeicher ES1 zum zweiten Energiespeicher ES2 und zur Systemlast L her, sodass die Systemlast L sowohl vom ersten Energiespeicher ES1als auch von dem zweiten Energiespeicher ES2 mit elektrischer Energie versorgt wird. Im geöffneten Schaltzustand unterbricht der zweite Schalter S2 die elektrische Verbindung vom zweiten Energiespeicher ES2 zum ersten Energiespeicher ES1 und zur Systemlast L, und somit den zweiten Strompfad.

Die Ansteuerung der beiden Schalter S1, S2 erfolgt über die erste und die zweite Steuereinrichtung SE1, SE2. Diese beiden Steuereinrichtungen SE1, SE2 weisen jeweils einen Ausgang auf, über diesen die beiden Steuereinrichtungen SE1, SE2 mit dem jeweiligen Steueranschluss GS1, GS2 des ersten und des zweiten Schalters S1, S2 elektrisch verbunden sind und als Ausgangssignals die Steuerspannungen Vgs1, Vgs2 für den jeweiligen Schalter S1, S2 bereitstellen. Mit dem Ausgang K24 ist die erste Steuereinrichtung SE1 mit dem Steueranschluss GS1 des ersten Schalters S1 elektrisch verbunden.

Die Steuervorrichtung ST weist ferner eine erste Nachladeeinrichtung NL1 zwischen dem vierten und dritten Anschluss K4, K3 auf, mit der die Steuervorrichtung ST den zweiten Energiespeicher ES2 mit Strom von dem Generator G bzw. dem ersten Energiespeicher ES1 auflädt. Bedarfsweise lädt die Steuervorrichtung ST auch den ersten Energiespeicher ES1 mit Strom vom zweiten Energiespeicher ES2 auf. Hierzu weist die Nachladeeinrichtung NL1 einen DC/DC-Wandler zur Umwandlung der Systemspannung Vsys1 oder Vsys2 des energiegebenden Energiesystems Esys1 oder Esys2 in die Systemspannung Vsys2 bzw. Vsys1 des Energiesystems Esys2 bzw. Esys1 des aktuell zu ladenden Energiespeichers ES2 bzw. ES1 auf, um den zu ladenden Energiespeicher Esys2 bzw. Esys1 auf den gewünschten Ladezustand mit entsprechenden Ladespannungen aufzuladen.

Das Bordnetz BN wird abhängig von der Größe der Systemlast L, also abhängig von der Höhe des Strombedarfs durch die dem Bordnetz BN zugeschalteten Energieverbraucher in drei verschiedenen Betriebszuständen betrieben. Diese drei Betriebszustände und Wechselvorgänge zwischen diesen-Betriebszuständen werden nun nachfolgend beschrieben.

In einem ersten Betriebszustand, in dem der Strombedarf durch die Systemlast L weitgehend stabil und unter dem Stromangebot liegt, das der Generator G maximal bereitstellen kann, wird das Bordnetz BN bzw. die Systemlast L allein von dem Generator G mit Strom versorgt. In diesem ersten Betriebszustand werden die beiden Schalter S1, S2 von den beiden Steuereinrichtungen SE1, SE2 gesteuert im geöffneten Schaltzustand gehalten.

In einem zweiten Betriebszustand im Bordnetz BN übersteigt der Strombedarf der Systemlast L durch Hinzuschalten von weiteren Energieverbrauchern das maximale Stromangebot vom Generator G. In diesem zweiten Betriebszustand wird der erste Energiespeicher ES1 durch Schließen des ersten Schalters S1 durch die erste Steuereinrichtung SE1 dem Bordnetz BN zugeschaltet. Durch Schließen des ersten Schalters S1 wird der erste geschlossene Strompfad vom ersten Energiespeicher ES1 zur Systemlast L hergestellt und die Systemlast L wird dann neben dem Generator G noch von dem ersten Energiespeicher ES1 mit Strom bzw. elektrischer Energie versorgt. Der erste Energiespeicher ES1 hält so zusammen mit dem Generator G eine stabile Betriebsspannung im Bordnetz BN aufrecht. Der zweite Schalter S2 wird von der zweiten Steuereinrichtung SE2 gesteuert weiterhin im geöffneten Schaltzustand gehalten.

In einem dritten Betriebszustand, in dem der Stromverbrauch im Bordnetz BN durch Zuschalten eines oder mehrerer leistungsstarken Energieverbraucher wie z. B. einen Anlasser für einen Verbrennungsmotor des Fahrzeugs FZ, in kurzer Zeit stark ansteigt, können der Generator G und der erste Energiespeicher ES1 den stark gestiegenen Strombedarf der Systemlast L allein nicht mehr bewältigen. Als Folge kann eine stabile Netzspannung im Bordnetz BN nicht mehr weiter aufrecht erhalten werden und diese droht, unter die für eine einwandfreie Funktion aller Energieverbraucher minimal erforderliche Betriebsspannung abzustürzen. In diesem Fall wird das zweite Energiesystem Esys2 bzw. der zweite Energiespeicher ES2 dem Bordnetz BN zugeschaltet. Das Zuschalten des zweiten Energiespeichers ES2 zu dem Bordnetz BN geschieht durch zeitgleiches Umschalten der beiden Schalter S1 und S2 durch die beiden Steuereinrichtungen SE1, SE2.

Durch Schließen des zweiten Schalters S2 und zugleich Öffnen des ersten Schalters S1 verbinden die beiden Steuereinrichtungen SE1, SE2 das zweite Energiesystem Esys2 mit dem ersten Energiesystem Esys1 bzw. den zweiten Energiespeicher ES2 mit dem ersten Energiespeicher ES1 sowie der Systemlast L und stellen so den zweiten Strompfad vom ersten Energiespeicher ES1 über den zweiten Energiespeicher ES2 zur Systemlast L her. Die Systemlast L wird nun neben dem Generator G und dem ersten Energiespeicher ES1 noch von dem zweiten Energiespeicher ES2 mit Strom versorgt. Der zweite Energiespeicher ES2 hält so mit dem Generator G und dem ersten Energiespeicher ES1 eine stabile Betriebsspannung im Bordnetz BN aufrecht.

Nachdem die drei Ausführungsbeispiele gemäß Figuren 1, 3 und 5 bezogen auf deren gemeinsamen Merkmale beschrieben wurden, werden diese nun bezogen auf deren jeweiligen besonderen Merkmale einzeln näher beschrieben.

Zuerst sei auf Figur 1 verwiesen, in der das Bordnetz BN gemäß dem ersten Ausführungsbeispiel dargestellt ist. Gemäß Figur 1 weist die erste Steuereinrichtung SE1 der Steuervorrichtung ST neben dem einen Ausgang K24 zwei Eingänge K21, K22 auf. Mit diesen zwei Eingängen K21, K22 ist die Steuereinrichtung SE1 jeweils mit einem Ausgang eines ersten und eines zweiten Spannungswandlers SW1, SW2 elektrisch verbunden. Der erste Spannungswandler SW1 ist wiederum eingangsseitig mit dem vierten Anschluss K4 der Steuervorrichtung ST und somit mit dem Pluspol des ersten Energiespeichers ES1 elektrisch verbunden. Der zweite Spannungswandler SW2 ist eingangsseitig mit dem dritten Anschluss K3 der Steuervorrichtung ST und somit mit dem Pluspol des zweiten Energiespeichers ES2 elektrisch verbunden.

Diese zwei Spannungswandler SW1, SW2 sind als DC/DC-Wandler gleichen Typs aber auch unterschiedlichen Typs mit jeweils einem vorab festgelegten, oder manuell und voneinander unabhängig einstellbaren Umwandlungskoeffizient k1, k2 ausgebildet. Die Spannungsumwandlung bei den beiden Spannungswandlern SW1, SW2 erfolgt prozentual, also die Ausgangsspannung Ua des Spannungswandlers verhält sich proportional zu der Eingangsspannung Ue, wobei es gilt: Ua = k×Ue, mit k gleich k1 bzw. k2. Der erste Umwandlungskoeffizient k1 beträgt bspw. 0,5 und der zwei Umwandlungskoeffizient k1 bspw. 1.

Damit liegen an den beiden Eingängen K21, K22 der ersten Steuereinrichtung SE1 jeweils die von den zwischengeschalteten Spannungswandlern SW1, SW2 um den jeweiligen Umwandlungskoeffizient k1, k2 umgewandelten Systemspannungen Vsys1, Vsys2 des ersten und des zweiten Energiesystems Esys2, Esys2.

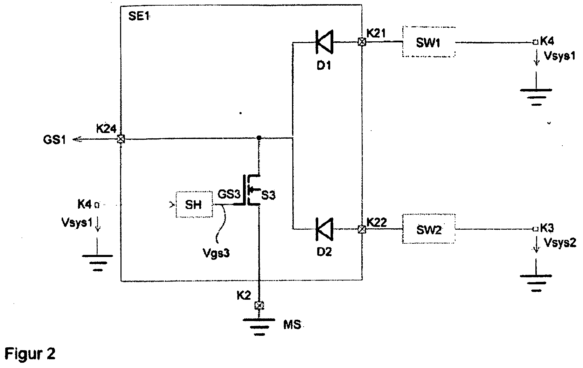

Nachdem die Steuervorrichtung ST gemäß Figur 1 grob beschrieben wurde, wird nun auf Figur 2 hingewiesen, in der die erste Steuereinrichtung SE1 der Steuervorrichtung ST gemäß Figur 1 näher dargestellt ist.

Die Steuereinrichtung SE1 gemäß Figur 2 weist zwei Dioden D1, D2 auf, welche mit ihrem jeweiligen Anodenanschluss mit dem ersten und dem zweiten Eingang K21, K22 der Steuereinrichtung SE1 und somit mit dem jeweiligen Ausgang eines der beiden Spannungswandler SW1, SW2, und mit ihrem jeweiligen Kathodenanschluss mit dem Ausgang K24 der Steuereinrichtung SE1 bzw. mit dem Steueranschluss GS1 des ersten Schalters S1 elektrisch verbunden sind, und den Strom von den Ausgängen der jeweiligen Spannungswandler SW1, SW2 zum Steueranschluss GS1 des ersten Schalters S1 hin leiten und umgekehrt sperren. Da die beiden Kathode-Anschlüsse der beiden Dioden D1, D2 zueinander und mit dem Ausgang K24 der Steuereinrichtung SE1 elektrisch verbunden sind, leitet eine der beiden Dioden D1 oder D2 die an ihrem Anodenanschluss anliegende Ausgangsspannung eines der beiden Spannungswandler SW1 oder SW2 weiter an den Ausgang K24 der Steuereinrichtung SE1 und somit an den Steueranschluss GS1 des ersten Schalters S1 weiter, welche größer als die Spannung am Anodenanschluss der anderen Diode D2 oder D1 bzw. die Ausgangsspannung des anderen Spannungswandlers SW2 oder SW1 ist. Bspw. liegt am ersten Eingang K21 der Steuereinrichtung SE1, somit am Anodenanschluss der ersten Diode D1 eine Spannung von 6V und am zweiten Eingang K22 der Steuereinrichtung SE1, somit am Anodenanschluss der zweiten Diode D1 eine Spannung von 5V. So ist die Spannung in Flussrichtung der ersten Diode D1, also die Spannung vom Anodenanschluss zum Kathodenanschluss der ersten Diode D1 höher als die Spannung in Flussrichtung der zweiten Diode D2, also die Spannung vom Anodenanschluss zum Kathodenanschluss der zweiten Diode D2. Folglich übergeht die erste Diode D1 in einen leitenden Zustand und die zweite Diode D2 in einen sperrenden Zustand. Somit wird die Spannung am Anodenanschluss der ersten Diode D1 bzw. am ersten Eingang K21 der Steuereinrichtung SE1 an den Ausgang K24 der Steuereinrichtung SE1 weitergeleitet.

Die Steuereinrichtung SE1 weist zwischen dem Ausgang K24 also zwischen dem Steueranschluss GS1 des ersten Schalters S1 und einer elektrischen Masse MS einen dritten Schalter S3, sowie eine Steuereinheit SH zum Steuern dieses dritten Schalters S3 auf.

Der dritte Schalter S3 ist ebenfalls als selbstsperrrender MOSFET-Halbleiterschalter ausgeführt und über den Gate- bzw. Steueranschluss GS3 steuerbar.

Die Steuereinheit SH wird mit der Systemspannung Vsys1 des ersten Energiesystems ES1 bzw. mit der Ladespannung Ves1 des ersten Energiespeichers ES1 versorgt und überwacht den Stromfluss im Bordnetz BN, indem diese den Strompegel des durch den ersten Anschluss K1 hindurchfließenden Stromes Is misst diesen mit einem vorgegebenen Stromschwellwert TH2 vergleicht. Basierend auf das Vergleichsergebnis und die Schaltzustände der ersten und des zweiten Schalters S1, S2 unmittelbar vor dem Mess- und Vergleichsvorgang steuert die Steuereinheit SH den dritten Schalter S3.

Liegt der gemessene Strompegel des Stromes Is unter dem Stromschwellwert TH2, hält die Steuereinheit SH den dritten Schalter S3 in einem geöffneten Zustand und legt somit den Gate-bzw. Steueranschluss GS1 des ersten Schalters S1 auf eine Ausgangsspannung einer der beiden Dioden D1 oder D2 an, die sich aktuelle im leitenden Zustand befindet. In diesem Fall ist der erste Schalter S1 von der einen Ausgangsspannung der leitenden Diode D1 oder D2 ansteuerbar und wird dem Spannungswert dieser Ausgangsspannung entsprechend geschlossen oder geöffnet bzw. im geschlossenen oder geöffneten Schaltzustand gehalten.

Steigt der Strompegel des Stromes Is stark an und überschreitet den Stromschwellwert TH2, und zugleich befinden sich alle beiden Schalter S1 und S2 im geöffneten Schaltzustand, so hält die Steuereinheit SH den dritten Schalter S3 in einem geöffneten Zustand und legt somit den Gate- bzw. Steueranschluss GS1 des ersten Schalters S1 weiterhin auf die eine Ausgangsspannung der leitenden Diode D1 oder D2 an. Der erste Schalter S1 ist somit weiterhin von der einen Ausgangsspannung der leitenden Diode D1 oder D2 ansteuerbar und wird dem Spannungswert dieser Ausgangsspannung entsprechend geschlossen oder geöffnet bzw. im geschlossenen oder geöffneten Schaltzustand gehalten.

Befindet sich der erste Schalter S1 aber im geschlossenen Schaltzustand und der zweite Schalter S2 im geöffneten Schaltzustand, so schließt die Steuereinheit SH den dritten Schalter S3 und legt somit den Gate- bzw. Steueranschluss GS1 des ersten Schalters S1 auf das Massepotential an der elektrischen Masse MS an. Folglich wird der erste Schalter S1 geöffnet und anschließend im geöffneten Schaltzustand gehalten. Zeitgleich wird der zweite Schalter S2 von der zweiten Steuereinrichtung SE2 gesteuert geschlossen und anschließend im geschlossenen Schaltzustand gehalten.

Sinkt bspw. nach einer Betriebsdauer der Strompegel des Stromes Is wieder unter und unterschreitet einen Wert von bspw. 80% des Schwellwertes TH2, so öffnet die Steuereinheit SH den dritten Schalter S3 und legt so den Gate- bzw. Steueranschluss GS1 des ersten Schalters S1 wieder auf die Ausgansspannung der einen leitenden Diode D1, D2 an. Der erste Schalter S1 wird dann wieder von der einen Ausgangsspannung der leitenden Diode D1 oder D2 ansteuerbar und wird dem Spannungswert dieser Ausgangsspannung entsprechend geschlossen oder geöffnet bzw. im geschlossenen oder geöffneten Schaltzustand gehalten. Zeitgleich wird der zweite Schalter S2 von der zweiten Steuereinrichtung SE2 gesteuert geöffnet und anschließend im geöffneten Schaltzustand gehalten.

Nachdem nun die in Figuren 1 und 2 dargestellten Komponenten und deren Funktionen beschrieben wurden, wird nachfolgend die Funktionsweise der Steuervorrichtung ST des ersten Ausführungsbeispiels näher beschrieben.

In einem fehlerfreien Betriebszustand des Bordnetzes BN, in dem sich der erste Schalter S1 im geschlossen Schalzustand und der zweite Schalter S2 im geöffneten Schaltzustand befindet, wird die Systemlast L von dem Generator G und dem ersten Energiespeicher ES1 mit Strom versorgt. In diesem Zustand beträgt die erste Systemspannung Vsys1 des ersten Energiesystems ES1 einen Spannungswert von 12V, und ist gleich der Ladespannung Ves1 des ersten Energiespeichers ES1, und höher als eine für einen stabilen Betrieb des Bordnetzes BN minimal erforderliche Betriebsspannung von bspw. 10V. Von dieser ersten Systemspannung Vsys1 bzw. dieser Ladespannung Ves1 des ersten des ersten Energiespeichers ES1versorgt funktioniert die Steuervorrichtung ST somit auch die Steuereinheit SH einwandfrei. Die zweite Systemspannung Vsys2 des zweiten Energiesystems Esys2 ist gleich der Ladespannung Ves2 des zweiten Energiespeichers ES2 und beträgt 5V.

Liegt der am Anschluss K1 gemessene Strompegel unter den Stromschwellwert TH2, setzt die Steuereinheit SH die Steuerspannung Vgs3 am Steueranschluss GS3 auf einen Signalpegel von logisch NULL und öffnet so den dritten Schalter S3 bzw. hält den dritten Schalter S3 in einem geöffneten Zustand. Als Folge liegt der Steueranschluss GS1 des ersten Schalters S1 auf der Ausgangsspannung am Ausgang K24 der ersten Steuereinrichtung SE1.

Die beiden Ladespannungen Ves1, Ves2 des ersten und des zweiten Energiespeichers ES1, ES2 bzw. die beiden Systemspannungen Vsys1, Vsys2 des ersten und des zweiten Energiesystems Esys1 und Esys2 werden über den vierten und dritten Anschluss K4 und K3 weiter auf den jeweiligen Eingang des ersten und des zweiten Spannungswandlers SW1, SW2 angelegt. Von dem jeweiligen Spannungswandler SW1, SW2 um den jeweiligen Koeffizient k1 gleich 0,5 und k2 gleich 1 umgewandelt liegt an dem jeweiligen Ausgang des ersten und des zweiten Spannungswandlers SW1 und SW2 und somit an dem jeweiligen Anodenanschluss der ersten und der zweiten Diode D1 und D2 jeweils eine Ausgangsspannung k1×Ves1 von 6V bzw. eine Ausgangsspannung k2xVes2 von 5V. Somit ist die Spannung in Flussrichtung der ersten Diode D1 bzw. die Spannung vom Anodenanschluss zum Kathodenanschluss der ersten Diode D1 mit 6V höher als die Spannung in Flussrichtung der zweiten Diode D2 mit 5V. Demzufolge ist die erste Diode D1 leitend und die zweite Diode D2 sperrend. Da zudem der dritte Schalter S3 sich im geöffneten Schaltzustand befindet und der Gate-Anschluss GS1 des ersten Schalters S1 nicht auf elektrische Masse angelegt ist, wird die Ausgangsspannung der ersten Diode D1 auf den Gate-Anschluss GS1 des ersten Schalters S1 angelegt. Da diese Ausgangsspannung mit einem Spannungswert von 6V größer als der zum Schließen des ersten Schalters S1 minimal erforderliche Steuerspannung von 5V ist, wird dieser erste Schalter S1 von dieser Ausgangsspannung der ersten Diode D1 somit von der ersten Ladespannung Ves1 des ersten Energiespeichers ES1 angesteuert geschlossen bzw. in einem geschlossenen Schaltzustand gehalten. Im geschlossenen Schaltzustand verbindet der erste Schalter S1 den ersten und zweiten Anschluss K1, K2 der Steuervorrichtung ST elektrisch miteinander und leitet so den Strom vom ersten Energiespeicher ES1 zur Systemlast L. In diesem Betriebszustand hält die zweite Steuereinrichtung SE2 den zweiten Schalter S2 im geöffneten Zustand.

In einem weiterhin fehlerfreien Systemzustand im Bordnetz, in dem der Strompegel im ersten Energiesystem Esys1 durch Zuschalten von einem oder mehreren leistungsstarken Energieverbraucher ansteigt und den Stromschwellwert TH2 überschreitet, besteht die Gefahr, dass der Generator G und der erste Energiespeicher ES1 allein den angestiegenen Strombedarf nicht mehr zu bewältigen und die erste Systemspannung Vsys1 droht, unter die zur Einhaltung der einwandfreien Funktion der Systemlast L minimal erforderliche Betriebsspannung abzufallen.

Diese Veränderung des Strompegels wird von der Steuereinheit SH durch Vergleichen des am ersten Anschluss K1 gemessenen Strompegels mit dem Stromschwellwert TH2 erfasst. Die Steuereinheit SH setzt dann deren Ausgangsspannung somit die Gate- bzw. Steuerspannung Vgs3 des dritten Schalters S3 auf einen zum Schließen des dritten Schalters S3 erforderlichen Spannungswert, bspw. 5V, und schließt so den dritten Schalter S3. Demzufolge wird der Steueranschluss GS1 des ersten Schalters S1 auf den Massepotential der elektrischen Masse MS gelegt. Folglich wird der erste selbstsperrende Schalter S1 geöffnet und der Stromfluss vom ersten Energiespeicher ES1 durch diesen ersten Schalter S1 hin zur Systemlast L unterbrochen.

Zeitgleich schließt aber die zweite Steuereinrichtung SE2 den zweiten Schalter S2 und verbindet so das zweite Energiesystem Esys2 bzw. den zweiten Energiespeicher ES2 mit dem ersten Energiesystem Esys1 bzw. mit dem ersten Energiespeicher ES1 und der Systemlast L. So wird ein Strompfad vom ersten Energiespeicher ES1 über den zweiten Schalter S2 zum zweiten Energiespeicher ES2 und anschließend zur Systemlast L hergestellt und die Bordnetzspannung dank dem zweiten Energiespeicher ES2 auf das Niveau der zum Betreiben der Systemlast L erforderlichen Betriebsspannung gehalten.

Da durch Schließen des dritten Schalters S3 der Ausgang K24 der ersten Steuereinrichtung SE1 somit die beiden Kathode-Anschlüsse der ersten und der zweiten Diode D1 und D2 auf den Massepotential, also auf 0V, angelegt wurde, und somit die Spannungen an den jeweiligen Kathode-Anschlüssen mit 0V niedriger als die Spannungen der jeweiligen Anode-Anschlüsse sind, geht die erste Diode D1 in den sperrenden Zustand über bzw. bleibt die zweite Diode D2 in dem sperrenden Zustand.

Tritt im Bordnetz BN ein Systemfehler durch bspw. Verpolung einer oder mehreren Energiezellen beim ersten Energiespeicher ES1 auf, so bricht die Ladespannung Ves1 de ersten Energiespeichers ES1 somit auch die Systemspannung Vsys1 im ersten Energiesystem Esys1 unkontrolliert bspw. bis zu 8V ab, ohne dabei ein Anstieg des Strompegels im Bordnetz BN verzeichnet wird.

In diesem Fall fällt die Ausgangsspannung k1×Ves1 des ersten Spannungswandlers SW1, welche proportional zu der Ladespannung Ves1 des ersten Energiespeichers ES1 bzw. der Systemspannung Vsys1 des ersten Energiesystems Esys1 ist, bis auf 4V (weiter mit k1=0,5) unter die zum Schließen des ersten Schalters S1 minimal erforderliche Steuerspannung von 5V ab. Folglich droht der erste Schalter S1 zu öffnen und der Stromfluss vom ersten Energiespeicher ES1 über diesen ersten Schalter S1 zur Systemlast L zu unterbrechen.

Da aber kein rapid ansteigender Strompegel erfasst wurde, schließen die zweite Steuereinrichtung SE2 und die Steuereinheit SH der ersten Steuereinrichtung SE1 den zweiten und den dritten Schalter S2, S3 nicht.

Außerdem, weil die Steuereinheit SH von dem ersten Energiesystem Esys1 mit Strom versorgt wird, wird die Steuereinheit SH beim Abfall der ersten Systemspannung Vsys1 aufgrund der fehlenden Betriebsspannung nicht mehr funktionieren. Demzufolge fällt die Steuer- bzw. Gatespannung Vgs3 für den dritten Schalter S3 aus und öffnet sich der als selbstsperrender MOSFET-Halbleiterschalter ausgebildete dritte Schalter S3 automatisch.

Durch den Abfall der Systemspannung Vsys1 fällt auch die Betriebsspannung für die zweite Steuerungseinrichtung SE2 weg und somit auch die Steuer- bzw. Gatespannung Vgs2 für den zweiten Schalter S2 ab. Der ebenfalls als selbstsperrende MOSFET-Halbleiterschalter ausgebildete zweite Schalter S2 öffnet sich auch automatisch. Dies ist gewünscht, damit das zweite Energiesystem Esys2 bzw. der zweite Energiespeicher ES2 nicht in das fehlerhafte Bordnetz BN angeschlossen wird.

Im fehlerhaften ersten Energiesystem Esys1, bspw. am Generator G entsteht jedoch eine parasitäre Strominjektion Ii, welche durch den schalterinternen parasitären Diodenpfad DS2 des im geöffneten Schaltzustand befindlichen zweiten Schalters S2 hindurch zum zweiten Energiesystem Esys2 hin unkontrolliert fließt und so einerseits zu Überhitzung des zweiten Schalters S2 und andererseits zu unkontrolliertem Überladen des zweiten Energiespeichers ES2 führen kann.

Diese Strominjektion Ii kann einfacherweise mithilfe vom geschlossenen Strompfad vom ersten Energiespeicher ES1 über den geschlossenen ersten Schalter S1 zur elektrischen Masse MS abgeführt und unschädlich gemacht werden.

Hierzu muss aber der erste Schalter S1 geschlossen bzw. im geschlossenen Schaltzustand gehalten werden.

Durch den Abfall der Ladespannung Ves1 des ersten Energiespeichers ES1 bzw. der Systemspannung Vsys1 des ersten Energiesystems Esys1 fällt auch die dieser Ladespannung Ves1 proportionale Ausgangsspannung k1×Ves1 des ersten Spannungswandlers SW1 und somit auch die Spannung am Kathodenanschluss der ersten Diode D1 unter die zum Schließen des ersten Schalters S1 minimal erforderliche Gatespannung Vgs2 von 5V ab. Als Folge droht der erste Schalter S1 zu öffnen bzw. kann der erste Schalter S1 nicht mehr geschlossen bzw. im geschlossenen Schaltzustand gehalten werden.

Beim Ausbleiben bzw. beim Abfall der Ladespannung Ves1 des ersten Energiesystems ES1 bzw. der Systemspannung Vsys1 des ersten Energiesystems Esys1 in diesem fehlerhaften Systemzustand kann der erste Schalter S1 jedoch dank der vom zweiten Energiespeicher ES2 bereitgestellten Steuerspannung und dem Steuerpfad von dem zweiten Energiespeicher ES2 über den zweiten Spannungswandler SW2 und die zweite Diode D2 hin zum Steueranschluss GS1 des ersten Schalters S1 geschlossen bzw. in einem geschlossenen Schaltzustand gehalten werden und so die parasitäre Strominjektion Ii vom ersten Energiesystem Esys1 zur elektrischen Masse MS ableiten.

Dies geschieht dadurch, dass das zweite Energiesystem Esys2 ein von dem ersten Energiesystem Esys1 unabhängiges geschlossenes System ist und somit beim Abfall der ersten Systemspannung Vsys1 die eigene Systemspannung Vsys2 von 5V bzw. die Ladespannung Ves2 des zweiten Energiespeichers ES2 weiterhin aufrecht halten und die Steuervorrichtung ST mit Strom versorgen kann.

Da die am Anschluss K3 anliegende Systemspannung Vsys2 des zweiten Energiesystems Esys2 bzw. die Ladespannung Ves2 des zweiten Energiespeichers ES2 beim Abbrechen der ersten Systemspannung Vsys1 des ersten Energiesystems Esys1 weiterhin unverändert bleibt, überschreitet die am Anodenanschluss der zweiten Diode D2 anliegende, vom zweiten Energiespeicher ES2 bereitgestellt und vom zweiten Spannungswandler SW2 um den Koeffizient k2 (k2 weiterhin gleich 1) umgewandelte Spannung k2×Ves2 mit 5V die durch den Abfall der ersten Systemspannung Vsys1 des ersten Energiesystems Esys1 gesunkene Spannung k1×Ves1 am Anodenanschluss der ersten Diode D1 von 4V. Folglich wird die zweite Diode D2 leitend und die erste Diode D1 sperrend. Somit wird die Ausgangsspannung k2×Ves2 des zweiten Spannungswandlers SW2 von der zweiten Diode D2 an den Ausgang K24 der ersten Steuereinrichtung SE1 weitergeleitet und am Steueranschluss GS1 des ersten Schalters S1 angelegt.

Da diese um den Koeffizient k2 geänderte Ladespannung k2×Ves2 vom zweiten Energiespeicher ES2 mit 5V (k2=1) gleich der zum Schließen des ersten Schalters S1 minimal erforderlichen Gatespannung ist, wird der erste Schalter S1 nun von der Systemspannung Vsys2 des zweiten Energiesystems Esys2 bzw. von der Ladespannung Ves2 des zweiten Energiespeichers ES2 gesteuert geschlossen bzw. im geschlossenen Schaltzustand gehalten.

Dadurch wird der erste Schalter S1 beim Auftreten eines Systemfehlers beim ersten Energiesystem Esys1 weiterhin mit der Systemspannung Vsys2 vom zweiten Energiesystem Esys2 bzw. der Ladespannung Ves2 des zweiten Energiespeichers ES2 geschlossen bzw. in einem geschlossenen Zustand gehalten und die parasitäre Strominjektion Ii vom ersten Energiesystem Esys1 wird durch diesen geschlossenen ersten Schalter S1 zur Masse abgeführt und unschädlich gemacht.

In der Folge daraus kann ein parasitärer Lade- oder Überladevorgang vom zweiten Energiespeicher ES2 und eine Systemüberhitzung am zweiten Schalter S2 bzw. innerhalb der Steuervorrichtung ST verhindert werden. Ferner kann das gesamte Bordnetz BN trotz des Systemfehlers in einem sicheren Systemzustand gehalten werden.

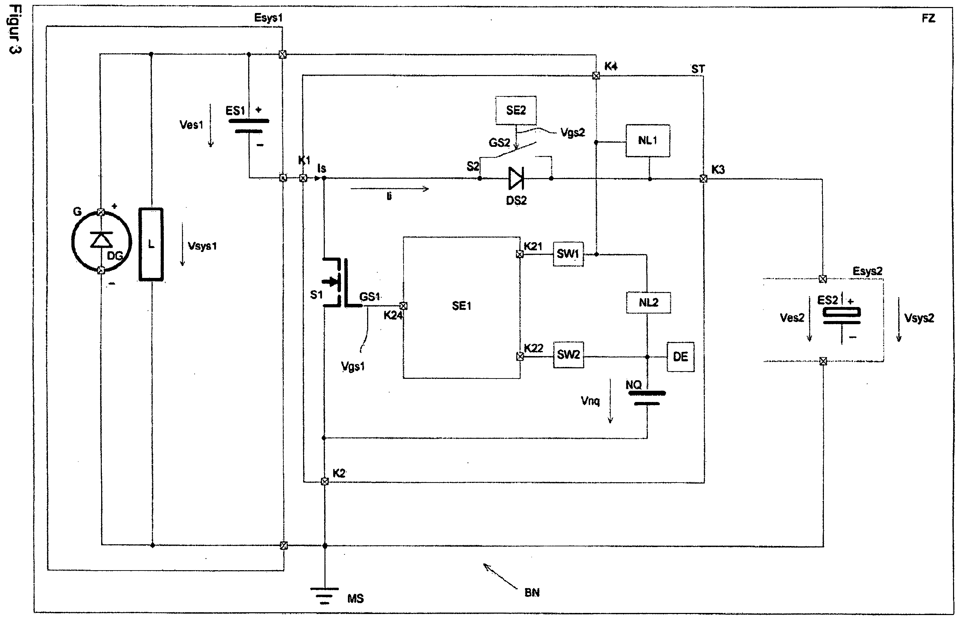

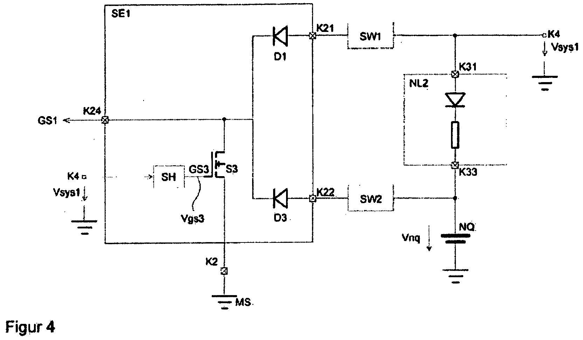

Nachdem die Steuervorrichtung ST des ersten Ausführungsbeispiels gemäß Figuren 1 und 2 sowie deren Funktionsweise detailiert erläutert wurden, wird nun anhand der Figuren 3 und 4 die Steuervorrichtung ST des zweiten Ausführungsbeispiels durch Vergleichen mit der Steuervorrichtung ST des ersten Ausführungsbeispiels näher beschrieben.

Die in den Figuren 3 und 4 darstellte Steuervorrichtung ST unterscheidet sich von der in Figuren 1 und 2 darstellten Steuervorrichtung ST vor allem dadurch, dass diese zwischen dem zweiten Spannungswandler SW2 und der elektrischen Masse MS eine Notstrom- bzw. Notspannungsquelle NQ aufweist, und bei Auftreten eines oben genannten Systemfehlers den ersten Schalter S1 anstelle der Ladespannung Ves2 vom zweiten Energiespeicher ES2 mit der Ladespannung Vnq von der Notstromquelle NQ steuert. Diese Notstromquelle NQ ist als wiederaufladbarer Akkumulator ausgebildet und wird von einer zwischen dem vierten Anschluss K4 (oder zwischen dem dritten Anschluss K3) und der Notstromquelle NQ zwischengeschalteten, zweiten Nachladeeinrichtung NL2 mit Strom vom ersten Energiespeicher ES1 (oder vom zweiten Energiespeicher ES2) aufgeladen. Der Ladezustand bzw. die Funktionalität der Notstromquelle NQ wird von einer Diagnoseeinrichtung DE diagnostiziert und überwacht, die am Pluspol der Notstromquelle NQ angeschlossen ist.

Der zweite Spannungswandler SW2 ist nun zwischen dem zweiten Eingang K22 und dem Pluspol der Notstromquelle NQ zwischengeschaltet und wandelt die Ladespannung Vnq der Notstromquelle NQ mit einem vorgegebenen, der Ladespannung Vnq der Notstromquelle NQ, welche in der Regel 5V ist, angepassten Umwandlungskoeffizient k2 (hier weiterhin 1) um.

Die zweite Nachladeeinrichtung NL2 gemäß Figur 4 umfasst jeweils einen Eingang K31 zu dem Pluspol des ersten Energiespeichers ES1 und einen Ausgang K33 zur Notstromquelle NQ und zwischen dem Eingang K31 und dem Ausgang K33 eine vom ersten Energiespeicher ES1 zur Notstromquelle NQ hin leitende und umgekehrt sperrende Diode und einen Widerstand in einer Reihenschaltung.

Die Funktionsweise der Steuervorrichtung ST gemäß Figuren 3 und 4 ist ähnlich wie die der Steuervorrichtung ST gemäß Figuren 1 und 2. Lediglich wird hier die Ladespannung Vnq der Notstromquelle NQ von dem zweiten Spannungswandler SW2 um den Koeffizient k2 umgewandelt an den Anodenanschluss der zweiten Diode D2 weitergeleitet und beim Spannungsabfall im ersten Energiesystem Esys1 von der ersten Steuereinrichtung SE1 an den Steueranschluss GS1 des ersten Schalters S1 angelegt. Der erste Schalter S1 wird dann von der Ladespannung Vnq der Notstromquelle NQ gesteuert geschlossen bzw. im geschlossenen Schaltzustand gehalten.

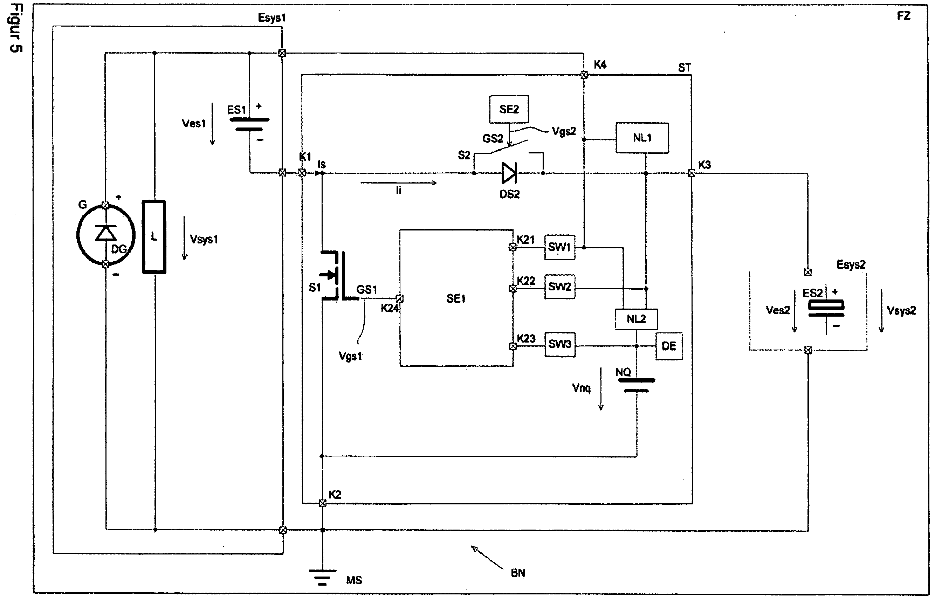

Nachdem die Steuervorrichtung ST des zweiten Ausführungsbeispiels gemäß Figuren 3 und 4 durch Vergleichen mit der Steuervorrichtung des ersten Ausführungsbeispiels beschrieben wurde, wird nun die Steuervorrichtung des dritten Ausführungsbeispiels gemäß Figuren 5 bis 7 näher beschrieben. Die in den Figuren 5 bis 5 darstellte Steuervorrichtung ST unterscheidet sich von der in Figuren 1 und 2 darstellten Steuervorrichtung ST vor allem dadurch, dass der erste Schalter S1 neben der Ladespannung Ves1 des ersten Energiespeichers ES1 und der Ladespannung Ves2 des zweiten Energiespeichers ES2 auch noch von der Ladespannung Vnq der Notstromquelle NQ gesteuert wird.

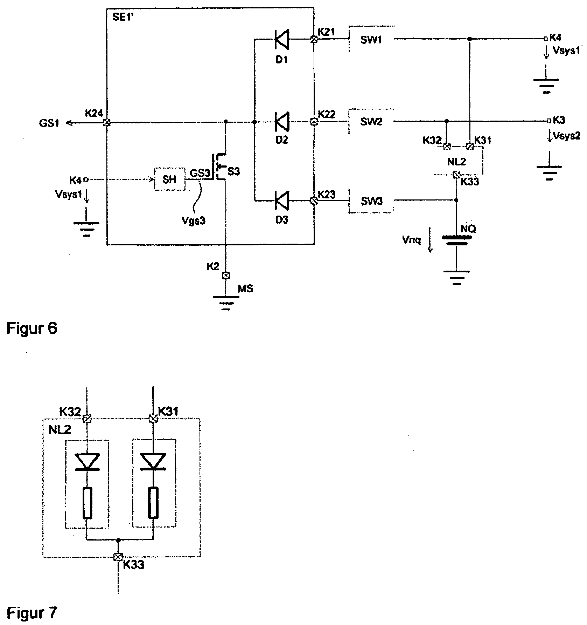

Hierzu weist die Steuervorrichtung ST einen dritten Spannungswandler SW3 mit einem vorab der Ladespannung Vnq der Notstromquelle NQ, welche in der Regel 5V ist, angepassten Umwandlungskoeffizient k3 auf. Entsprechend weist die erste Steuereinrichtung SE1 einen dritten Eingang K23 auf. Über diesen dritten Eingang K23 ist die erste Steuereinrichtung SE1 mit dem Ausgang des dritten Spannungswandlers SW3 elektrisch verbunden. Ferner weist die Steuereinrichtung SE1 gemäß Figur 6 eine dritte Diode D3 zwischen dem dritten Eingang K23, somit dem Ausgang des dritten Spannungswandlers SW3 und dem Ausgang K24, somit dem Steueranschluss GS1 des ersten Schalters S1, auf.

Der dritte Spannungswandler SW3 wandelt die Ladespannung Vnq der Notstromquelle NQ um den Koeffizient k3 um und leitet diese umgewandelte Spannung k3×Vnq dann an den Anodenanschluss der dritten Diode D3 weiter. So ist für den ersten Schalter S1 ein dritter redundanter Steuerpfad von der Notstromquelle NQ über den dritten Spannungswandler SW3 und die dritte Diode D3 hin zum Steueranschluss GS1 des ersten Schalters S1 geschaffen, welcher im fehlerhaften Systemzustand sowohl beim ersten Energiesystem Esys1 als auch beim zweiten Energiesystem Esys2 den ersten Schalter S1 sicher schließen bzw. im geschlossenen Zustand halten kann.

Die Notstromquelle NQ kann in diesem Fall sowohl von dem ersten als auch von dem zweiten Energiespeicher ES1, ES2 mit Strom aufgeladen werden. Hierzu weist die Nachladeeinrichtung NL2 gemäß Figur 7 jeweils einen Eingang K31, K32 zu dem Pluspol des jeweiligen Energiespeichers ES1, ES2 sowie einen Ausgang K33 zur Notstromquelle NQ auf. Zwischen dem jeweiligen Eingang K31, K32 und dem Ausgang K33 weist die Nachladeeinrichtung NL2 jeweils eine Diode und einen Widerstand in einer Reihenschaltung auf. Der Ladezustand der Notstromquelle NQ bzw. der Ladevorgang bei der Notstromquelle NQ wird von einer Diagnoseeinrichtung DE überwacht und geregelt.

Die Funktionsweise der Steuervorrichtung ST des dritten Ausführungsbeispiels gemäß Figuren 5 bis 7 ähnelt der der Steuervorrichtung ST des ersten Ausführungsbeispiels gemäß Figuren 1 und 2 oder der Steuervorrichtung ST des zweiten Ausführungsbeispiels gemäß Figuren 3 und 4. Lediglich wird hier beim Spannungsabfall im ersten Energiesystem Esys1 die Ladespannung Vnq der Notstromquelle NQ oder die Ladespannung Ves2 des zweiten Energiespeichers ES2 an den Steueranschluss GS1 des ersten Schalters S1 angelegt und hält den ersten Schalter S1 im geschlossenen Schaltzustand, je nach dem, welche der beiden von diesen beiden Spannungen durch die jeweiligen Spannungswandler SW2, SW3 umgewandelten Anode-Spannungen der beiden Dioden D2 und D3 größer ist als die Andere. Beim Spannungsabfall sowohl im ersten als auch im zweiten Energiesystem Esys1, Esys2 wird dann die Ladespannung Vnq der Notstromquelle NQ an den Steueranschluss GS1 des ersten Schalters S1 angelegt und hält den ersten Schalter S1 im geschlossenen Schaltzustand.

### Bezugszeichenliste:

- Esys1, Esys2: Energiesystem
- ES1, ES2: Energiespeicher
- ST: Vorrichtung
- G: Generator
- DG: Gleichrichterschaltung
- L: Systemlast
- S1, S2, S3: Schalter
- DS2: parasitärer Diodenpfad im zweiten Schalter S2
- NQ: Notstromquelle
- NL1, NL2: Nachladeeinrichtung
- DE: Diagnoseeinrichtung
- SW1, SW2, SW3: Spannungswandler
- SE1, SE2: Steuereinrichtung
- SH: Steuereinheit
- D1, D2, D3: Diode, elektrisches Ventil
- K1, K2, K3, K4: Anschluss der Steuervorrichtung ST
- K21, K22, K23, K24: Anschluss der Steuereinrichtung SE1
- K31, K32, K33: Anschluss der Nachladeeinrichtung NL2
- GS1, GS2: Gate- bzw. Steueranschluss des Schalters S1, S2
- MS: elektrische Masse

## Patentansprüche

1. Bordnetz (BN) für ein Fahrzeug (FZ), mit folgenden Merkmalen:
- einem ersten Strompfad, umfassend:
o eine Systemlast (L) mit zumindest einem Energieverbraucher,
o einen ersten Energiespeicher (ES1) zum Bereitstellen von elektrischer Energie,
o einen ersten mittels einer ersten Steuerspannung (Ves1) steuerbaren, selbstsperrenden Schalter (S1), der ausgeführt ist, in einem geschlossenen Schaltzustand den ersten Energiespeicher (ES1) mit der Systemlast (L) zu derer Versorgung mit elektrischer Energie elektrisch zu verbinden,
- einem zweiten Strompfad, umfassend:
o die Systemlast (L),
o den ersten Energiespeicher (ES1) und eine Energiebereitstellungsvorrichtung (ES2, NQ) zum Bereitstellen von elektrischer Energie, wobei die Energiebereitstellungsvorrichtung (ES2, NQ) zur Versorgung der Systemlast (L) mit dieser elektrisch verbindbar ausgeführt ist,
- einer Steuervorrichtung (ST) zum Erfassen eines Spannungswertes der ersten Steuerspannung (Ves1) und zum Schließen des ersten Schalters (S1), wenn der erfasste Spannungswert der ersten Steuerspannung (Ves1) unter einen zum Schließen des ersten Schalters (S1) im geschlossenen Zustand minimal erforderlichen Spannungsschwellwert (TH1) fällt,
- wobei die Steuervorrichtung (ST) ferner ausgeführt ist, den ersten Schalter (S1) mit einer von der Energiebereitstellungsvorrichtung (ES2, NQ) bereitgestellten Steuerspannung (Ves2, Vnq) zu schließen.

2. Bordnetz (BN) nach Anspruch 1, das einen zweiten Energiespeicher (ES2) als die Energiebereitstellungsvorrichtung aufweist, die ausgeführt ist, eine zweite Steuerspannung (Ves2) bereitzustellen, wobei die Steuervorrichtung (ST) ferner ausgeführt ist, mit dieser zweiten Steuerspannung (Ves2) den ersten Schalter (S1) zu schließen.

3. Bordnetz (BN) nach Anspruch 1, das eine Notspannungsquelle (NQ) als die Energiebereitstellungsvorrichtung aufweist, die ausgeführt ist, eine dritte Steuerspannung (Vnq) bereitzustellen, wobei die Steuervorrichtung (ST) ferner ausgeführt ist, mit dieser dritten Steuerspannung (Vnq) den ersten Schalter (S1) zu schließen.

4. Bordnetz (BN) nach einem der vorangehenden Ansprüche, wobei die Steuervorrichtung (ST) ferner ausgeführt ist, den ersten Schalter (S1) nur dann zu schließen bzw. im geschlossenen Zustand zu halten, wenn sich der zweite Schalter (S2) im geöffneten Zustand befindet.

5. Bordnetz (BN) nach Anspruch 4, wobei die Steuervorrichtung (ST) ferner ausgeführt ist, abhängig von Spannungswerten der ersten Steuerspannung (Ves1) und zumindest einer der zweiten (Ves2) und der dritten (Vnq) Steuerspannungen den ersten Schalter (S1) mit der ersten Steuerspannung (Ves1), mit der zweiten Steuerspannung (Ves2) oder mit der dritten Steuerspannung (Vnq) zu schließen bzw. im geschlossenen Zustand zu halten.

6. Bordnetz (BN) nach einem der vorangehenden Ansprüche, wobei
- der erste Schalter (S1) einen Steueranschluss (GS1) zum Anlegen der Steuerspannung (Ves1, Ves2 oder Vnq) aufweist, und
- die Steuervorrichtung (ST) ein erstes, zwischen dem Steueranschluss (GS1) des ersten Schalters (S1) und dem ersten Energiespeicher (ES1) angeordnetes, zum Steueranschluss (GS1) hin leitendes und umgekehrt sperrendes, elektrisches Ventil (D1) aufweist.

7. Bordnetz (BN) nach Anspruch 6, wobei die Steuervorrichtung (ST) ein zweites, zwischen dem Steueranschluss (GS1) des ersten Schalters (S1) und dem zweiten Energiespeicher (ES2) angeordnetes, zum Steueranschluss (GS1) hin leitendes und umgekehrt sperrendes, elektrisches Ventil (D2) aufweist.

8. Bordnetz (BN) nach Anspruch 6 oder 7, wobei die Steuervorrichtung (ST) ein drittes, zwischen dem Steueranschluss (GS1) des ersten Schalters (S1) und der Notstromquelle (NQ) angeordnetes, zum Steueranschluss (GS1) hin leitendes und umgekehrt sperrendes, elektrisches Ventil (D3) aufweist.

9. Bordnetz (BN) nach einem der Ansprüche 3 bis 8, wobei
- die Notstromquelle (NQ) ein wiederaufladbarer Akkumulator ist, und
- das Bordnetz (BN) zwischen der Notstromquelle (NQ) und einem der beiden Energiespeicher (ES1, ES2) eine Nachladeeinrichtung (NL2) zum Aufladen der Notstromquelle (NQ) aufweist.

10. Bordnetz (BN) nach einem der vorangehenden Ansprüche, wobei die Steuervorrichtung (ST) zwischen dem Steueranschluss (GS1) des ersten Schalters (S1) und einer elektrischen Masse (MS) einen dritten steuerbaren, selbstsperrenden Schalter (S3) aufweist, der ausgeführt ist, in einem geschlossenen Schaltzustand den Steueranschluss (GS1) mit der elektrischen Masse (MS) elektrisch kurzzuschließen.

11. Bordnetz (BN) nach Anspruch 10, wobei die Steuervorrichtung (ST) eine Steuereinheit (SH) zur Steuerung des dritten Schalters (S3) aufweist, wobei diese Steuereinheit (SH) ausgeführt ist,
- einen aktuellen Strompegel am Strompfad vom ersten Energiespeicher (ES1) zur Systemlast (L) zu erfassen,
- den aktuell erfassten Strompegel mit einem vorgegebenen Stromschwellwert (TH2) zu vergleichen, und
- bei Überschreiten des Stromschwellwertes (TH2) durch den aktuell erfassten Strompegel den dritten Schalter (S3) zu schließen.

12. Fahrzeug (FZ) mit einem Bordnetz (BN) nach einem der Ansprüche 1 bis 11.

## Claims

1. On-board supply system (BN) for a vehicle (FZ), having the following features:
- a first power path, comprising:
o a system load (L) having at least one energy consumer,
o a first energy store (ES1) for making available electrical energy,
o a first self-locking switch (S1) which can be controlled by means of a first control voltage (Ves1) and is designed to connect, in a closed switched state, the first energy store (ES1) electrically to the system load (L) in order to supply the latter with electrical energy,
- a second power path, comprising:
o the system load (L),
o the first energy store (ES1) and an energy-supply device (ES2, NQ) for supplying electrical energy, wherein the energy-supply device (ES2, NQ) is designed so as to be electrically connectable to the system load (L) in order to supply it,
- a control device (ST) for detecting a voltage value of the first control voltage (Ves1) and for closing the first switch (S1) if the detected voltage value of the first control voltage (Ves1) drops below a voltage threshold value (TH1) which is the minimum necessary to close the first switch (S1) in the closed state,
- wherein the control device (ST) is also designed to close the first switch (S1) with a control voltage (Ves2, Vnq) which is supplied by the energy-supply device (ES2, NQ).

2. On-board supply system (BN) according to Claim 1, which has a second energy store (ES2) as the energy-supply device, which device is designed to supply a second control voltage (Ves2), wherein the control device (ST) is also designed to close the first switch (S1) with this second control voltage (Ves2).

3. On-board supply system (BN) according to Claim 1, which has an emergency power source (NQ) as the energy-supply device which is designed to supply a third control voltage (Vnq), wherein the control device (ST) is also designed to close the first switch (S1) with this third control voltage (Vnq).

4. On-board supply system (BN) according to one of the preceding claims, wherein the control device (ST) is also designed to close the first switch (S1) and keep it in the closed state only when the second switch (S2) is in the opened state.

5. On-board supply system (BN) according to Claim 4, wherein the control device (ST) is also designed to close the first switch (S1) with the first control voltage (Ves1), with the second control voltage (Ves2) or with the third control voltage (Vnq), or keep it in the closed state, as a function of voltage values of the first control voltage (Ves1) and at least one of the second and third control voltages (Ves2, Vnq).

6. On-board supply system (BN) according to the one of the preceding claims, wherein
- the first switch (S1) has a control terminal (GS1) for applying the control voltage (Ves1, Ves2 or Vnq), and
- the control device (ST) has a first electric valve (D1) which is arranged between the control terminal (GS1) of the first switch (S1) and the first energy store (ES1) and conducts towards the control terminal (GS1) and blocks in the opposite direction.

7. On-board supply system (BN) according to Claim 6, wherein the control device (ST) has a second electric valve (D2) which is arranged between the control terminal (GS1) of the first switch (S1) and the second energy store (ES2) and conducts towards the control terminal (GS1) and blocks in the opposite direction.

8. On-board supply system (BN) according to Claim 6 or 7, wherein the control device (ST) has a third electric valve (D3) which is arranged between the control terminal (GS1) of the first switch (S1) and the emergency power source (NQ) and conducts towards the control terminal (GS1) and blocks in the opposite direction.

9. On-board supply system (BN) according to one of Claims 3 to 8, wherein
- the emergency power source (NQ) is a rechargeable accumulator, and
- the on-board supply system (BN) has, between the emergency power source (NQ) and one of the two energy stores (ES1, ES2), a recharging apparatus (NL2) for charging the emergency power source (NQ).

10. On-board power supply (BN) according to one of the preceding claims, wherein the control device (ST) has a third controllable, self-locking switch (S3) between the control terminal (GS1) of the first switch (S1) and an electrical earth (MS), which switch (S3) is designed to short-circuit the control terminal (GS1) electrically to the electrical earth (MS) in a closed switched state.

11. On-board supply system (BN) according to Claim 10, wherein the control device (ST) has a control unit (SH) for controlling the third switch (S3), wherein this control unit (SH) is designed
- to detect a current power level on the power path from the first energy store (ES1) to the system load (L),
- to compare the currently detected power level with a predefined power threshold value (TH2), and
- to close the third switch (S3) when the currently detected power level exceeds the power threshold value (TH2).

12. Vehicle (FZ) having an on-board supply system (BN) according to one of Claims 1 to 11.

## Revendications

1. Réseau de bord (BN) pour un véhicule automobile (FZ), comportant les caractéristiques suivantes :
- un premier trajet de courant, comprenant :
∘ une charge de système (L) comportant au moins un appareil consommateur d'énergie,
∘ un premier accumulateur d'énergie (ES1) pour fournir de l'énergie électrique,
∘ un premier interrupteur (S1) autobloquant, pouvant être commandé au moyen d'une première tension de commande (Ves1) qui est conçu afin de relier électriquement dans un état de commutation fermé le premier accumulateur d'énergie (ES1) avec la charge de système (L) en vue de son alimentation en énergie électrique,
- un deuxième trajet de courant, comprenant :
∘ la charge de système (L),
∘ le premier accumulateur d'énergie (ES1) et un dispositif de fourniture d'énergie (ES2, NQ) pour fournir de l'énergie électrique, dans lequel le dispositif de fourniture d'énergie (ES2, NQ), afin d'alimenter la charge de système (L), est conçu de manière à pouvoir être relié électriquement avec celle-ci,
- un dispositif de commande (ST) pour détecter une valeur de tension de la première tension de commande (Ves1) et pour fermer le premier interrupteur (S1), quand la valeur de tension détectée de la première tension de commande (Ves1) baisse sous une valeur de seuil de tension (TH1) minimale requise en l'état fermé pour fermer le premier interrupteur (S1),
- dans lequel le dispositif de commande (ST) est en outre conçu afin de fermer le premier interrupteur (S1) avec une tension de commande (Ves2, Vnq) fournie par le dispositif de fourniture d'énergie (ES2, NQ).

2. Réseau de bord (BN) selon la revendication 1, qui présente un deuxième accumulateur d'énergie (ES2) comme dispositif de fourniture d'énergie, qui est conçu afin de fournir une deuxième tension de commande (Ves2), dans lequel le dispositif de commande (ST) est en outre conçu afin de fermer le premier interrupteur (S1) avec cette deuxième tension de commande (Ves2).

3. Réseau de bord (BN) selon la revendication 1, qui présente une source de tension de secours (NQ) comme dispositif de fourniture d'énergie, qui est conçue afin de fournir une troisième tension de commande (Vnq), dans lequel le dispositif de commande (ST) est en outre conçu afin de fermer le premier interrupteur (S1) avec cette troisième tension de commande (Vnq).

4. Réseau de bord (BN) selon une des revendications précédentes, dans lequel le dispositif de commande (ST) est en outre conçu afin de fermer, ou maintenir en l'état fermé le premier interrupteur (S1) seulement quand le deuxième interrupteur (S2) se trouve en l'état ouvert.

5. Réseau de bord (BN) selon la revendication 4, dans lequel le dispositif de commande (ST) est en outre conçu afin de fermer, ou maintenir en l'état fermé en fonction des valeurs de tension de la première tension de commande (Ves1) et d'au moins une de la deuxième (Ves2) et la troisième (Vnq) tensions de commande le premier interrupteur (S1) avec la première tension de commande (Ves1), avec la deuxième tension de commande (Ves2) ou avec la troisième tension de commande (Vnq).

6. Réseau de bord (BN) selon une des revendications précédentes, dans lequel ;
- le premier interrupteur (S1) présente un raccord de commande (GS1) pour appliquer la tension de commande (Ves1, Ves2 ou Vnq), et
- le dispositif de commande (ST) présente une première soupape électrique (D1) conductrice dans le sens du raccord de commande (GS1), disposée entre le raccord de commande (GS1) du premier interrupteur (S1) et le premier accumulateur d'énergie (ES1) et bloquante inversement.

7. Réseau de bord (BN) selon la revendication 6, dans lequel le dispositif de commande (ST) présente une deuxième soupape électrique (D2) conductrice dans le sens du raccord de commande (GS1), disposée entre le raccord de commande (GS1) du premier interrupteur (S1) et le deuxième accumulateur d'énergie (ES2) et bloquante inversement.

8. Réseau de bord (BN) selon la revendication 6 ou 7, dans lequel le dispositif de commande (ST) présente une troisième soupape électrique (D3) conductrice dans le sens du raccord de commande (GS1), disposée entre le raccord de commande (GS1) du premier interrupteur (S1) et la source de courant de secours (NQ) et bloquante inversement.

9. Réseau de bord (BN) selon une des revendications 3 à 8, dans lequel :
- la source de courant de secours (NQ) est un accumulateur rechargeable, et
- le réseau de bord (BN) présente entre la source de courant de secours (NQ) et un des deux accumulateurs d'énergie (ES1, ES2) un dispositif de recharge (NL2) pour recharger la source de courant de secours (NQ).

10. Réseau de bord (BN) selon une des revendications précédentes, dans lequel le dispositif de commande (ST) présente entre le raccord de commande (GS1) du premier interrupteur (S1) et une masse électrique (MS) un troisième interrupteur (S3) commandable, autobloquant, qui est conçu afin de court-circuiter électriquement dans un état de commutation fermé le raccord de commande (GS1) avec la masse électrique (MS).

11. Réseau de bord (BN) selon la revendication 10, dans lequel le dispositif de commande (ST) présente une unité de commande (SH) pour commander le troisième interrupteur (S3), dans lequel cette unité de commande (SH) est conçue afin de
- détecter un niveau de courant actuel sur le trajet de courant allant du premier accumulateur d'énergie (ES1) à la charge de système (L),
- comparer le niveau de courant actuel détecté avec une valeur seuil de courant prescrite (TH2), et
- en cas de dépassement de la valeur seuil de courant (TH2) par le niveau de courant actuel détecté, fermer le troisième interrupteur (S3).

12. Véhicule automobile (FZ) comportant un réseau de bord (BN) selon une des revendications 1 à 11.
